Europäisches Patentamt

European Patent Office

Office européen des brevets

(11) Publication number: **0 510 266 A1**

## EUROPEAN PATENT APPLICATION

(21) Application number: **91303660.4**

(22) Date of filing: **23.04.91**

(51) Int. Cl.5: **B29C 37/00, B29C 67/14**

(43) Date of publication of application:
**28.10.92 Bulletin 92/44**

(84) Designated Contracting States:
**AT BE CH DE DK ES FR GR IT LI LU NL SE**

(71) Applicant: **Darby, Norman Perry David**
**The Lawn, Strawberry Hill, Swiss Valley**
**Clevedon, Avon BS21 6AF(GB)**

(72) Inventor: **Darby, Norman Perry David**
**The Lawn, Strawberry Hill, Swiss Valley**
**Clevedon, Avon BS21 6AF(GB)**

(74) Representative: **Calderbank, Thomas Roger et al**
**MEWBURN ELLIS 2 Cursitor Street**
**London EC4A 1BO(GB)**

(54) Decorated moulded products.

(57) In order to decorate a moulded article a decoration (22) of pigmented hardenable liquid material is formed on a backing sheet (21). The result, possibly with a layer (23) of transparent liquid material covering the decoration forms a preformed decorated item. That item may be stored for subsequent use. When it is to be used, it is located in a mould with a layer (25) of transparent hardenable liquid material between it and the mould (24) that layer (25) being applied to the item, to the mould, or both. The backing sheet (21) is then removed and the article (26) moulded in the mould (24). This causes the decoration to be bonded to the article (26). Alternatively, the article may have the decoration enclosed between two layers of hardenable liquid material.

Fig. 3a.

Fig. 3b.

This invention relates to a method of decorating a moulded product and to decorative moulded products so formed. A moulded product, and the term "mould" in the present specification include arrangements in which the surface of the mould is a plane, and the edges of the mould are defined by a gasket or by the edges of the plane.

It is known to apply decoration to the surface of a moulded product by silk screening the decoration onto the surface of the mould immediately before the moulding operation is performed. The disadvantage of this procedure is that the mould cycle is extended to allow the silk screen operation to be performed on the surface of the mould and then to allow the silk screened decoration to dry or set. This procedure prevents the use of the mould during the printing operation and increases the "down time" or preparation time in the moulding operation, thereby increasing costs.

A second disadvantage of using the screen printing technique directly onto the mould is that there are limitations on the size of the decoration that can be applied and on the positions on the surface of the product to which the decoration can be applied. Thus, any screen printing technique requires a frame around the screen and the frame necessarily takes up space within the mould preventing the application of the decoration to those areas of the surface of the mould over which the frame is located during the screen operation. Furthermore, by the nature of the frame the decoration cannot be applied on any surface other than one for which the frame and the surface are both flat or are both similarly curved in a single plane.

It is also known, from GB-A-1046764, to form a pre-formed decorated item, consisting of the material to form the decoration itself, and a carrier layer, which is of a material compatible with the material of the article which, during moulding becomes integral with the material of the article.

The present invention seeks to develop the idea of forming a decorated article using a preformed decoration item, because the use of a preformed decoration item has the advantage that a large number of such items may be prepared in advance, and checked for accuracy, before use. Only those preformed decorated items which have been produced correctly will ever be used. In some of the existing techniques discussed above, a mistake in the formation of the decoration will result in the entire article being rendered useless.

In a first aspect, the present invention proposes that the preformed decorated item has a decoration on a backing sheet (which is not compatible with the material of the article). That item is located in the moulding in which the article is to be produced, with a layer of transparent hardenable resin material between the preformed item and the mould.

That transparent hardenable liquid material is compatible with the article of the material, and may be applied either to a surface of the preformed item before it is placed into the mould, or in the mould itself. Then, before the article is moulded, the backing sheet is removed, leaving the decoration held in the mould by the hardenable liquid material. Then, when the article is moulded, the hardenable liquid material bonds to the article, encapsulating the decoration between the now hardened liquid material and the article. The decoration is thus protected.

Preferably, the decoration is screen printed onto the backing sheet, or on a layer on the backing sheet and since this is done as a separate operation from the moulding, to produce the preformed decorated item, the item can be made weeks or months ahead of the moulding operation, and the preformed decoration items can be stored and used only when needed. This eliminates the way in the known methods of forming a decorated article, due to the need to employ screen printing techniques within the mould itself.

In a further development, a layer of hardenable liquid material is formed over the decoration as part of the creation of the preformed decorated item itself. That liquid material may be located only at the locations of the decoration, or may cover substantially the whole of the backing sheet. This arrangement, when used in the first aspect of the invention discussed above, has the advantage that, when the preformed decorated item is located in the mould, there will then be bonding between the transparent material of the preformed decorated item, and the transparent material which exists between that item and the mould.

Indeed, this idea may be used independently of the first aspect of the present invention, as a second aspect, in which the preformed item includes a layer of hardenable liquid material, covering at least the decoration, and then the preformed item is applied directly to the mould.

Thus, according to a first preferred arrangement, the decoration to be applied to the surface of the mould is produced as a preformed item by a process comprising printing or otherwise forming the decoration using a pigmented hardenable liquid material (e.g. resin) onto a backing sheet and then coating the pigmented hardenable liquid material on the backing sheet with a layer of a transparent hardenable resin composition. The thus-produced preformed decorated item has a layered structure comprising a backing sheet on which there is provided a continuous or discontinuous layer of pigmented material and provided, at least, over the layer of pigmented material forming a decoration is a layer of a transparent hardenable resin composition. There may be a layer of hardenable liquid material between the backing sheet and the decoration. This preformed decorated item may be applied to the surface of the mould, prior to the moulding operation, by firstly coating the surface of the mould or the item or both with a layer of a transparent hardenable resin composition and then placing the preformed decorated item on the coated surface of the mould such that the layer of transparent hardenable resin composition on the preformed item is in intimate contact with the layer of transparent hardenable resin composition provided on the mould surface. After allowing the layers of transparent hardenable resin composition to undergo crosslinking, the backing sheet may be peeled off in readiness for the mounting operation.

In at least the first aspect of the invention, the method preferably comprises applying to the surface of the mould in the area of the mould which is to carry the decoration, or applying to the item a coating of a transparent hardenable resin composition and, thereafter, applying the decoration to the coated area. It is highly preferred that the transparent hardenable resin composition used to precoat the mould surface or the item is chemically similar to the transparent resin composition which may overlie the pigment layer in the preformed decoration since then it is possible for the two layers, when in intimate contact with each other, to crosslink, together. For this reason, the transparent hardenable resin composition used to coat the mould surface will typically be an unsaturated polyester resin "gel coat" of the type described above. Preferably such an arrangement comprises applying the preformed decoration on the backing sheet over the coated area of the mould surface with the hardenable resin layer of the preformed decoration in contact with the coating, pressing the backing sheet against the mould surface to expel any air and form a close uninterrupted bond between the coating on the mould and the preformed decoration, allowing the hardenable resin layer of the preformed decoration and the hardenable resin in the mould coating to cure, peeling the backing sheet from the decoration now bonded to the coated area and moulding the article. Release tape may be placed on the mould surface, prior to the coating thereof with the transparent hardenable resin, to form a frame around the area of the surface to which the resin is to be applied, followed by applying the resin inside the frame so formed and applying to the coated surface a decoration preformed on a backing sheet of size and form sufficient to extend over the frame whereby the subsequent release of the backing sheet is facilitated.

In the first aspect of the present invention, the layer of hardenable liquid material between the preformed decorated item and the mould must be transparent, as this will form the outer surface when the article is finished. Also, if a layer of hardenable liquid material is formed over the decoration, as part of the preformed decorated item, then that may also be transparent. In a similar way, the layer of hardenable liquid material which is formed over the decoration, in the second embodiment, must also be transparent. Furthermore, in the second aspect, the backing sheet may be removed from the preformed item, either before that item is placed in the mould or after.

A further development of the second aspect of the present invention concerns protection of the layer of transparent hardenable liquid material covering the decoration. It may be covered by a cover sheet which is either removed prior to the location of the preformed item in the mould, or may even be located between the preformed item and the surface of the mould itself.

In the first and second aspects of the present invention the decoration is first formed on the backing sheet, and then the decoration bonds to a layer of hardenable liquid material. In a third aspect of the present invention, however, the aim is to form a layer of hardenable liquid material on each side of the decoration, as part of a preformed item. To do this, decoration is applied to a backing sheet, and a first layer of hardenable liquid material is formed over the backing sheet covering the decoration. If that first layer of hardenable liquid material is to form the outer surface when the article is completed, it is preferable that cover sheet is substantially flat and rigid e.g. of glass and thus may be considered to be a former or mould, but it is also possible for the first layer of hardenable liquid material to be unexposed, as will be discussed later. Where the first layer of hardenable liquid material is of curable resin, the covering of that layer with the cover sheet, and the forcing out of air from between the first cover sheet and the backing sheet may, in itself, cause the hardenable liquid material at least partially to cure. Subsequently, the backing sheet is removed and the second layer of hardenable material is formed on the first, thereby trapping the decoration between the first and second layers of hardenable liquid material. The resulting structure may form the preformed item, or a further cover sheet may be placed over the second layer of hardenable liquid material both to protect and to cause it at least partially to cure and so increase its bonding to the first layer of hardenable liquid material.

There are then several possibilities. Firstly, both cover sheets may be removed before the moulding of the article occurs, or else the preformed decorated item may be placed in the mould with one or other of the cover sheets adjacent the mould, and the cover sheet that is not adjacent the mould being removed before the article is moulded (either before or after the preformed item is placed in the mould). In arrangements where there are two cover sheets, the fact that there are also two layers of hardenable liquid material means that the preformed item is symmetric and therefore may be in either orientation, as desired. Furthermore, either the first or second layer of hardenable liquid material may be pigmented, although that pigmented layer must then be further from the mould than the decoration when the article is formed. In this way, a background colour may be formed behind the decoration, when the finished article is seen.

The present invention has another aspect. Again, it is concerned with a preformed decorated item in which the decoration is applied to a backing sheet, and again the preformed decorated item includes a hardenable liquid material. However, in this fourth aspect of the present invention, the hardenable liquid material is formed as a layer over at least part of the backing sheet, and then the decoration is formed on that hardenable liquid material. Thus, the hardenable liquid material is between the decoration and the backing sheet in this fourth aspect, whilst in the second aspect the decoration is between the hardenable liquid material and the backing sheet. Then, the preformed decorated item is adhesively bonded to a surface of the mould, and the article moulded in the mould. When the article is then removed from the mould, the hardenable liquid material has bonded to the article, encapsulating the decoration, and the backing sheet may then be removed. Indeed, depending on the relative bonding strengths of the adhesive, and the backing sheet to hardenable liquid material bond, the act of removing the article from the mould may itself remove the backing sheet from the article.

The adhesive bonding of the preformed decorated item to the mould may be achieved by coating the backing sheet with a layer of adhesive before it is located in the mould, or by pre-coating a suitable surface of the mould.

It is particularly preferred, with this fourth aspect, that a layer of transparent hardenable resin composition is applied on the backing sheet prior to the decoration printing or forming step. Obviously, because of the way in which the preformed decoration is applied in the case of the third aspect, the pigmented material will be printed or formed on the backing sheet in the mirror image of the desired decoration to be applied to the moulded article.

In the fourth aspect of the invention, the method preferably comprises bonding adhesively to the surface of the mould the backing sheet which preferably has on its other, i.e. non-bonded, side a release agent which is coated with a layer or a transparent unsaturated polyester resin "gel coat" composition onto which is provided a continuous or discontinuous coating of pigmented unsaturated polyester resin composition.

According to both the first, second and third described aspects, the material to be moulded to produce the decorated article will preferably be a glass fibre reinforced polyester resin having a surface coating of a polyester "gel coat" composition which is compatible with and which is capable of crosslinking with the polyester "gel coat" composition utilized in the preformed decoration. According to this, during the moulding decoration the polyester "gel coat" of the preformed decoration bonds to the polyester "gel coat" on the surface of the moulded article whereby, after curing the decoration becomes permanently bonded into the surface layer of the moulded article.

The technique of screen printing is well known; the technique uses a cloth, such as silk or a fine mesh synthetic material, (e.g. nylon), through which liquid material is squeezed. Such screening techniques enables thin, even layers less than 100 microns in thickness and more particularly less than 50 microns in thickness to be applied to a surface. In contrast, alternative techniques such as spraying or painting apply much thicker layers.

The pigmented hardenable liquid material used in the various embodiments of the invention may be any liquid material that it capable of hardening which contains one or more pigments, dyes or other colouring matter and which is capable of being applied to a surface by a technique such as screen printing or by utilizing stencils. In general, resin-containing inks (for instance, PVC ink) can be used although care has to be taken in ensuring compatibility between an ink and the transparent hardenable resin composition with which it comes into contact in the performance of the invention. Preferably, however, the pigmented material will be a hardenable resin composition containing one or more pigments etc. Examples of suitable/resin compositions include polyester resin, acrylic resins and phenol-formaldehyde resins, with unsaturated polyester resin being especially preferred.

The present invention enables the application to a moulded article of a decoration obtained by printing with a resin loaded with a significant amount of pigment, typically containing more than 10% by weight but not exceeding 90% by weight of pigment. The use of such high loadings of pigment in a resin is discouraged in the art since it is generally believed that at pigment loadings greater than 10% by weight the resin will not set. If a pigmented resin cannot set properly, any printed image using the pigmented resin will, likewise, not set properly and may be liable to premature breakdown. By using the present invention a decoration formed by a pigmented resin having a high pigment content can be provided on a moulded article which decoration is protected by a hard resin layer obtained by the hardening of the hardenable resin composition. It is believed that the layer of hardenable resin composition overlying the decoration on the surface of the moulded article may contribute towards the setting of the decoration by the chemical cross-linking of the pigmented material and the hardenable resin composition.

The pigmented material is applied to the surface of a backing sheet to produce the desired decoration. By "decoration" it is included not only decorative designs applied for the purposes of mere ornamentation but also letters, words, symbols, logos and other types of presentation of visual information which it may be desired to apply to a moulded article. The decoration is preferably applied by a conventional screen printing technique or a stencilling technique to the surface of the backing sheet.

The backing sheet is preferably flexible since it enables, as has already been described, the application of the design to mould surfaces which are not flat. Any backing sheet can be used which retains its integrity during the manufacture of the preformed decoration and during the application of the decoration to the moulded article. Typically, the backing sheet will be a transparent plastics sheet although it is equally possible to use sheets which are opaque if they are to be removed during the process of applying the preformed decoration to the moulded article. Good results have been achieved using, as the backing sheet, a sheet of poly(ethyleneterephthalate) which is available commercially under the name "Melinex" ("Melinex" is a registered trade mark). In order to facilitate the removal of the backing sheet from the preformed decoration during the process of applying the preformed decoration to the moulded article, the surface of the backing sheet should preferably be precoated with a layer of release agent. Release agents and coatings are widely available and the choice of such for use in the present invention is not critical. According to the fourth aspect described above, the backing sheet will advantageously be provided with an adhesive layer on its reverse side.

In the embodiments discussed above, the decoration is formed on a backing sheet or on a layer of hardenable liquid material on that backing sheet. Normally, the backing sheet will be flexible, in which case, during the formation of the decoration and/or any hardenable liquid material layer on the backing sheet, the backing sheet must be supported by a suitable former or mould surface.

The transparent hardenable liquid composition used to prepare the preformed decorated item in the present invention preferably comprises a resin which is chemically similar to the resin used in the pigment material since it may then be possible for cross-linking to take place between the pigmented resin layer and the transparent resin layer. Examples of suitable resins include phenolic resins, acrylic and polyester resins used together with their appropriate hardener systems. Especially preferred for use in the present invention are unsaturated polyester resins which are, in general, prepared by reacting mixtures of unsaturated and saturated dibasic acids (for example, maleic acid, phthalic acid and isophthalic acid) or their anhydrides with their dihydric alcohols (for example, ethylene glycol, propylene glycol and diethylene glycol) in styrene monomer. Such unsaturated polyester resins will generally be in the form of a "gel coat" which contains a catalyst/activator system and optionally one or more wax additives. Such gel coats form, after application, gels wherein the polymer is partially cross-linked. Typically, catalyst/activator systems for unsaturated polyester resins comprise a peroxide initiator such a methyl ethyl ketone hydroperoxide and a styrene-soluble multivalent metal salt activator such as cobalt naphthenate or cobalt octobate.

According to a preferred arrangement, the pigmented resin composition comprises a pigmented unsaturated polyester resin composition and the transparent hardenable resin composition is an unsaturated polyester resin "gel coat" composition.

In all the aspects of the present invention discussed above, a preformed decorated item is formed, which is placed in a mould, and then the article is moulded. However, yet another aspect of the present invention permits a decoration to be applied to an article which has already been formed. In this aspect, the simplest way of achieving such decoration of a pre-formed article is to form the decoration of pigmented hardenable material on a backing sheet, form a layer of hardenable liquid material on a surface of the article, locate the backing sheet on the article, cause the pigmented hardenable liquid material to bond to the layer of hardenable liquid material, and remove the backing sheet. If the layer of hardenable liquid material is coloured, a background colour may then be given to the decoration.

In a further development of this, and in order to protect the decoration, a further layer of transparent hardenable liquid material may be formed over the decoration after the backing sheet has been removed. If that further layer of transparent hardenable liquid material is relatively fluid, it may be necessary to provide a gasket to surround the area to be covered by that further layer, and then to provide a former or mould surface above that layer to ensure that its outermost surface is smooth. If, on the otherhand, a gel coat is used, e.g. of the type discussed above, then the gasket is unnecessary, but the former or mould surface is still desirable in order to achieve a smooth outer finish. Of course, that outer former or mould surface and the gasket, if used, will have to be removed before the article can be considered to be complete.

A further development of this aspect of the invention, in which the decoration is applied to a pre-moulded article, makes use of the preformed decorated item of earlier aspects, and in particular that of the third aspect. In such an arrangement, at its simplest, the preformed decorated item comprises the backing sheet, the decoration, a layer of hardenable liquid material, and a cover sheet. To decorate an article, the backing sheet is removed and applied to the article via a layer of hardenable liquid material in a similar way to that discussed above. Where there is a further layer of hardenable liquid material, so that the decoration is encapsulated between the first and second layers of hardenable liquid material, and a second cover sheet is used, then either the first or second cover sheets may be removed and the thus exposed layer of hardenable liquid material will form the layer of the preformed decorated item which is closest to the moulded article.

Preferably, in this further embodiment, in order to improve the bond between the surface of the moulded article and the adjacent layer of hardenable liquid material (preferably of resin) (which may be clear or pigmented), the surface of the moulded article may be prior etched or abraded. By this technique, it is possible to produce raised areas on the articles surface which enables the production of a three-dimensional decorative effect. Typically, the site on the article surface to be provided with the decoration will be framed using a release tape, and the framed area is then abraded. Indeed, that frame may act as the gasket for relatively fluid hardenable liquid material.

In some of the aspects of the present invention discussed above, the decoration must be printed or formed on the backing sheet or other surfaces in a mirror image of the desired final decoration. In other arrangements, however, the decoration may match that appearing on the final article. This latter arrangement has the advantage that the correctness of the decoration can then be checked before the decoration is applied to the article.

The invention also includes a moulded product decorated by the methods set forth above.

In order to protect the preformed decorated item during storage and/or transport, a protective sheet of e.g. paper may be applied to the item. Normally, that sheet will be on the opposite side of the decoration from the backing sheet.

In the specification the forming of a decoration is discussed. Such a decoration may be a single colour or may be multi-coloured.

Embodiments of the invention will now be described, by way of example, with reference to the accompanying drawings wherein:-

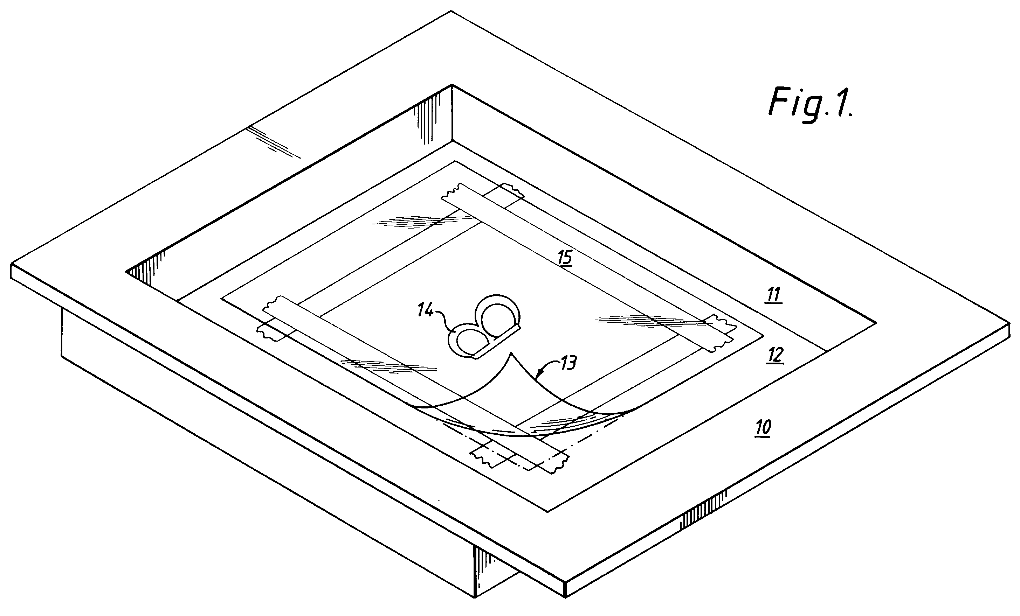

Fig. 1 illustrates diagrammatically a simple mould in which a decoration is applied by the method of a first embodiment of the invention, and,

Fig. 2 illustrates the mould of Figure 1 after the decoration has been applied.

Fig. 3a and 3b shows sectional views of stages in a method according to a second embodiment of the present invention, Fig. 3a showing the location of the preformed item in the mould, and Fig. 3b also showing the article;

Figs. 4a and 4b show sectional views illustrating a third embodiment of the present invention, Fig. 4a showing the location of the preformed item in the mould and Fig. 4b also showing the article;

Figs 5a and 5b show a fourth embodiment of the present invention, Fig. 5a showing the location of the preformed item in the mould and Fig. 5b also showing the article;

Figs. 6a to 6d show sectional views illustrating a fifth embodiment of the present invention;

Figs. 7a and 7b show sectional views illustrating a modification of the fifth embodiment;

Figs. 8a to 8c show sectional views illustrating a sixth embodiment of the present invention;

Figs. 9a to 9c show sectional views illustrating a sixth embodiment of the present invention; and

Figs. 10a and 10b show sectional views illustrating an eighth embodiment of the present invention.

Referring to the drawings, a simple mould 10 is provided with a rectangular moulding recess 11 within which is to be moulded a simple rectangular plate in glass fibre with a surface moulded in polyester resin.

Where it is intended that the moulded article is to be decorated on its surface it would be usual to decorate the corresponding surface of the mould, in this case the base 12 of the mould, by a silk screen technique in a manner such that the silk screened decoration will bond to the surface of the article to be moulded within the mould thereby forming a decorative moulded product.

The problem associated with silk screening within the mould is that the decoration can only be applied within the frame of the silk screen and cannot, for example, be applied onto the corners or around curved surfaces of the mould but can only be applied in a relatively central area within the mould. Furthermore, the silk screen technique itself delays the moulding process by increasing the preparation time both for the printing and for any curing which must take place before the moulding operation can commence.

In the method according to the present invention a "Melinex" film approximately 50 microns thick and shown in the Figures at 13 is coated by a silk screen technique with a decoration 14 formed from a pigmented unsaturated polyester resin. An approximately 50 micron coating forming the decoration, in this case a letter "B" is applied to the sheet 13 a separate operation some weeks before the moulding operation. The printing decoration is coated with a clear isophthalic acid-based polyester get coat supplied by West & Senior Limited under their reference WS1964A. Again that coating is applied to a depth of about 50 microns. A series of such decorated sheets can be prepared and stored for weeks or months until needed in the moulding process. By coating the screened decoration with cross-linking top gel coat the pigmented resin will partially cure and remain ready for use for extended periods of time.

The decorated sheet may have a paper sheet applied thereto, for protection. The paper sheet is then removed befor the decorated sheet is used.

The surface 12 of the mould has applied thereto a frame of double sided polypropylene tape 15 the purpose of which is to facilitate the release subsequently of the film 13 when it is peeled from the surface of the mould.

The rectangular frame of tape 15 defines the area on the surface of the mould within which the decoration is to be applied. Within that frame a coating of the same gel coat as previously used in coating the decoration on backing sheet 13 is applied by brushing onto the surface of mould 12. It would also be possible to coat the decoration or both the decoration and the mould. Thereafter the backing sheet 13 is placed over the area within tapes 15 with the decoration 14 face down such that the clear coating on the decoration comes into contact with the coating on the surface of the mould.

Using a roller or other suitable appliance, the film 13 is rolled and squeezed such as to exclude all air which may be disposed between the film 13 and the surface 12 of the mould and to ensure that a firm bond exists between the get coat forming the coating on the surface 12 and the gel coat covering the pigmented polyester resin forming the preformed decoration 14.

The film is left in position on the surface 12 of the mould for about 20 minutes at 20°C to ensure that the coatings have completely cross-linked and set.

Thereafter, the film 13 is peeled away from the surface 12. The tape 15 facilitates this removal by forming the discontinuity and a well defined edge at the inner edge of the tapes.

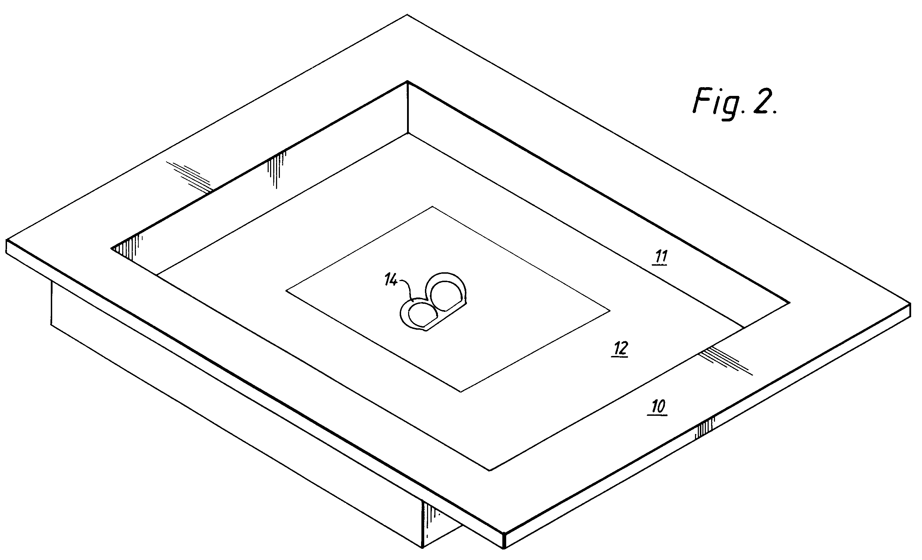

Thereafter, the tape 15 is removed from the surface 12 leaving, as shown in Figure 2, the pigmented polyester resin forming the decoration 14 bonded to the coating on the mould surface.

Thereafter the article is moulded within the mould 10 using, for example, glass fibre material with the surface coating of a polyester gel coat which is compatible with an cross-links with the gel coat covering the pigmented polyester resin forming decoration 14. thus, a bond will be formed during the moulding operating between the polyester gel coat surrounding the decoration 14 and the polyester gel coat upon the surface of the article to be moulded whereby the decoration becomes permanently bonded to the surface of the moulded articles.

The technique for decorating the moulded product may be used in the manufacture of signs and articles formed of plastics materials, such as glass fibre reinforced plastics products and polypropylene and provides greatly reduced processing times by avoiding the need for screen printing within the mould immediately prior to moulding. By screen printing the decoration as a separate step and storing the screen printed decoration ready for use the processing time at the mould can be greatly reduced.

Furthermore, by mounting the screen printing decoration on a flexible sheet the decoration can be placed around the curved surfaces and corners which could not normally be reached by the frame of a screen printed technique where it is applied within the mould.

Although described by reference to screen printing techniques, it will be appreciated that any appropriate screen can be used, not only silk but also synthetic material such as nylon and, furthermore, any stencilling technique could be employed provided thin layers of material can be produced.

Other developments of the embodiment discussed above are also possible. In the above embodiment, the preformed decorated sheet has a layer of hardenable transparent liquid material covering the decoration. However, and particularly if the decoration is itself relatively robust, this layer may be omitted, so that the only layer of hardenable liquid material is that which is applied, e.g. by brushing, to the surface of the decorated sheet, or to the mould, when the decorated sheet is applied to the mould.

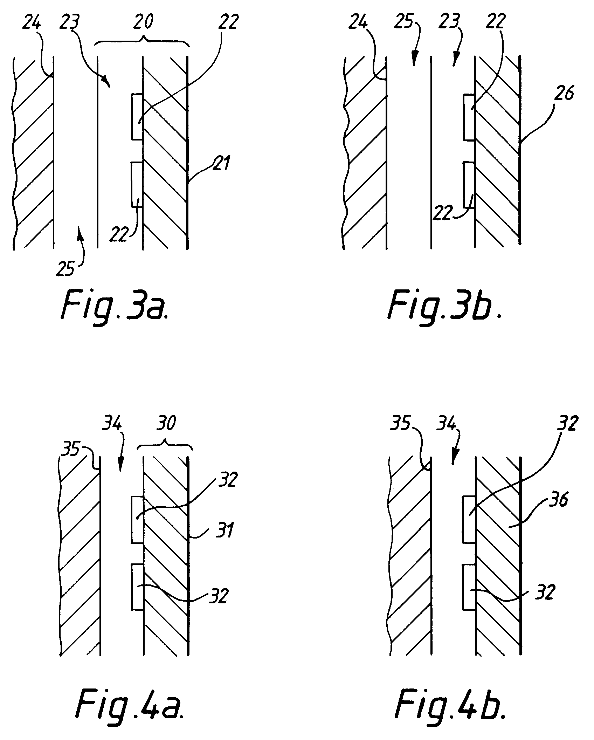

Figs. 3 and 4 show the difference between these two arrangements, with Fig. 3a and 4a representing the location of the preformed decorated item in the mould, and Figs. 3b and 4b showing the situation when the backing sheet is removed. Thus, in Fig. 3a, the preformed decorated item 20 comprises the backing sheet 21, the decoration 22, and a first layer 23 of hardenable liquid material. Then, the item 20 is located adjacent a surface 24 of the mould, with a second layer 25 of hardenable liquid material which is either coated on the layer 23 before the item 20 is located adjacent the surface 24 of the mould, or is spread on the surface 24 of the mould before the item 20 is located thereon, or both Then, the backing sheet 21 is removed and the article 26 is moulded in place within the mould as shown in Fig. 3b. In the alternative shown in Figs. 4a and 4b, the item 30 comprises only the backing sheet and the decoration 32, and there is then a layer 34 of hardenable liquid material which is either formed on the item 30 before it is located adjacent a surface 35 of the mould, or is formed on that surface 35 of the mould before the item 30 is located on that surface 35. Then, as before, the backing sheet 31 is removed and the moulded article 36 is moulded in the mould. Of course, in Figs. 3 and 4 the horizontal dimension is exaggerated for the sake of clarity.

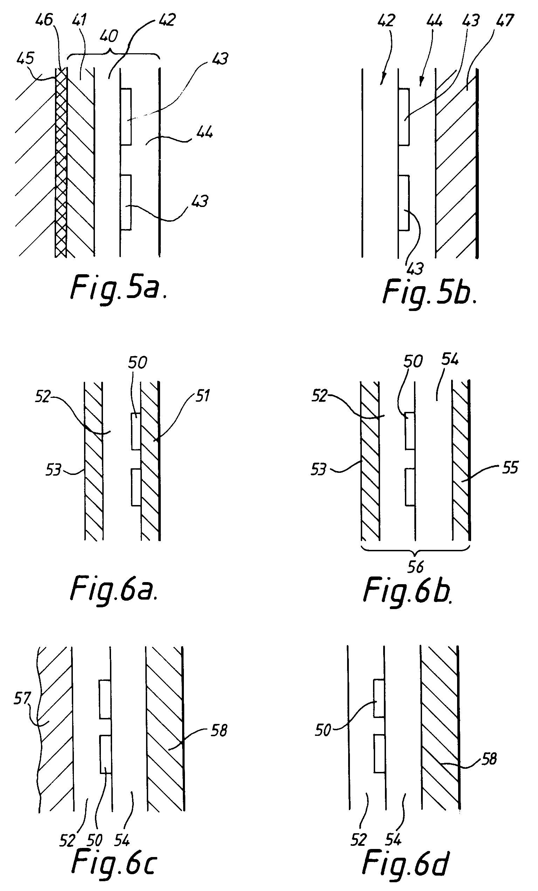

As was discussed previously, the present invention also has another aspect, using adhesive. This is shown in Figs. 5a and 5b. First, a preformed decorated item 40 is formed, having a backing sheet 41, a layer 42 of transparent hardenable material, and decoration 43 formed on the layer 42. A further layer 44 of hardenable transparent material may be formed to cover the decoration 43, for protection. The resulting item 40 is then bonded to a surface 45 of the mould using a layer 46 of adhesive. That adhesive may be coated on the backing sheet 41 before the item 40 is located in the mould, or may be coated on the surface 46 before the item 40 is located in the mould. Then, the item is moulded as before.

The, the article is removed from the mould and the backing sheet 41 itself removed, to get the result shown in Fig. 5b.

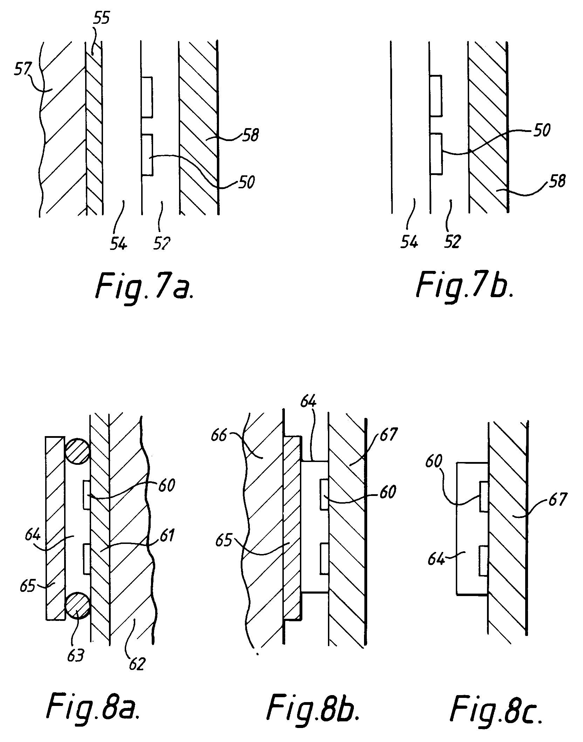

Figs. 6a to 6d illustrate another embodiment of the present invention. In this embodiment, a decoration 50 is formed on a backing sheet 51, and then the decoration is covered with a layer of hardenable resin material 52. A cover sheet 53 is then located over the layer 52, and the exclusion of air then causes the layer 52 at least partially to cure, bonding the decoration 50 to the layer 52. The result is the structure shown in Fig. 6a. This could be used as it stands, but preferably the backing sheet 51 is removed and a further layer 54 (see Fig. 6b) of hardenable material is formed on the layer 52, so that the decoration 50 is now encapsulated between the layers 52 and 54. A second cover sheet 55 is then placed over the layer 54, and again that layer 54 may at least partially cure, bonding to the layer 52. The resulting preformed item 56 may then be stored for subsequent use. Both its outer surfaces are protected by respective cover sheets 53, 55.

To use the preformed item, both cover sheets 53, 55 may be removed and the resulting structure placed in a mould 57. An article 58 may then be moulded in that mould 57, giving a cross-sectional structure as shown in Fig. 6c. Once the article 58 is removed from the mould, as shown in Fig. 6d, the layer 54 is bonded to it, and thus the decoration 50 is held on the article 58. The resulting structure is somewhat similar to that of Fig. 5b, in that the decoration is encapsulated between two layers of material.

The embodiment of Fig. 6a to 6d may be modified by placing the layer 54 closer to the mould 57 than the layer 52. There is substantially no difference in the result. Furthermore, whichever of the layers 52, 54 is to be adjacent the article 58 may be pigmented to give a background colour to the decoration 50.

In a further development of the embodiment of Fig. 6a to 6d, one or other of the cover sheets 53, 55 may remain on the preformed decorated item 56 when that item is placed in the mould 57, and Fig. 7a shows an arrangement in which this is done. It can be noted that it Fig. 7a, it is the second cover sheet 55 which is placed adjacent the mould but is equally possible to place the first cover sheet 53 adjacent the mould. In this latter case the layer 54 will be adjacent the article 58, rather than the layer 52. Again, however, when the article 58 is removed from the mould, and the appropriate cover sheet 55 removed, the resulting structure (shown in Fig. 7b) is substantially the same as that of Fig. 6d. Indeed, in such an arrangement, the cover sheet 55 may be held to the mould 57 by adhesive, as in the embodiments of Figs 5a and 5b.

Figs. 8a to 8c show a further embodiment, in which a decoration 60 is formed on a backing sheet 61, which backing sheet is supported by a mould 62. Then, a gasket 63 is placed on the backing sheet 61, surrounding the decoration 60, and a layer of transparent hardenable liquid material, e.g. resin, 64 is located over the decoration 60, the gasket 63 preventing spread of that resin. This arrangement is particularly appropriate where the resin 64 is in liquid form, rather than a gel. A cover sheet 65 is then placed over the resin 64, to cause it to cure. The backing sheet 61 may then be removed, and the resulting structure placed in a mould 66 and an article 67 moulded therein, as shown in Figs. 8a and 8b. The gasket 63 is removed prior to the formation of the article 67. Again, the cover sheet 65 may be held to the mould surface 66 by adhesive, if desired. As a completion of the moulding operation, the article 67 may be removed from the mould, and the result is shown in Fig. 8c. It can be noted that in this embodiment the transparent layer 64 has defined boundaries, due to the use of the gasket 63.

All the embodiments discussed above are concerned with the application of a decoration to a moulded article as part of the process for moulding that article. However, the present invention is also applicable to arrangements in which decoration is applied to a pre-moulded article.

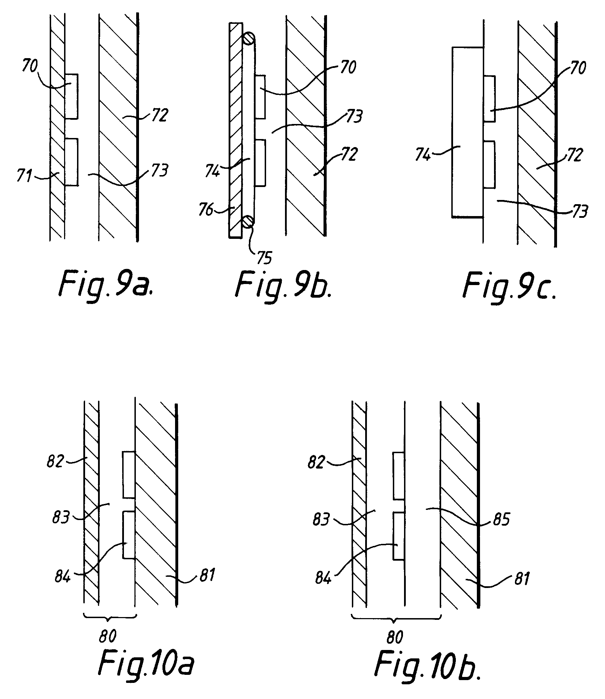

Figs. 9a to 9c show an embodiment of this type. First, a decoration 70 is formed on a backing sheet 71, and the result is applied to a pre-moulded article 72 via a layer 73 of hardenable liquid material which may be relatively fluid or may be a gel coat. If the backing sheet 71 is removed, a decorated article results. However, if the method stops at this step, the decoration 70 is immediately on the surface of the article, and therefore may be damaged. Therefore, as shown in Fig. 9b, a further layer 74 of transparent hardenable liquid material may be formed. In the arrangement shown in Fig. 9b, a gasket 75 is located on the layer 73, and the resin material 74 then placed over the layer 73. An outer former 76 covers the resin 74 and the exclusion of air causes that resin 74 to cure, bonding it to the layer 73. The former 76 may be removed and the resulting structure is shown in Fig. 9c. The decoration 70 is now encapsulated between the layer 73 and the transparent resin 74, protecting it. As in previous embodiments, the layer 73 may be pigmented if desired, to give a background colour to the decoration 70.

In embodiments of 8a to 8c, and 9a to 9c, the former 65, 76 defines the outermost surface of the article, and at least over the decoration 60, 70. If this is to be a smooth surface, the former 65, 76, may be of glass, rather than being a flexible layer.

Figs. 10a and 10b show another embodiment, in which decoration is applied to e pre-moulded article, but in which the arrangement follows more closely the embodiments of Figs. 4 and 6. In Fig. 10a, a preformed decorated item 80 is applied to the surface of an article 81, which preformed item comprises a backing sheet 82, a layer 83 of transparent hardenable resin and a decoration 84. In the arrangement of Fig. 10b, the arrangement is similar except that there is a further layer 85 of hardenable liquid material between the layer 83 and the article 81. The layer 85 may then be pigmented.

In all the embodiments discussed above, the hardenable liquid resin may be relatively fluid, or may be a gel coat. The latter has the advantage that it is not necessary to prevent flowing of the material, but has the disadvantage that it is difficult to achieve a smooth finish.

## Claims

1. A method of decorating a moulded article comprising:

   forming a decoration of pigmented hardenable liquid material on a backing sheet, thereby to form a preformed decorated item;

   locating the preformed decorated item in a mould; and

   moulding the article in the mould, whereby the decoration is bonded to the surface of the moulded article during moulding;

   characterised in that:

   when the preformed decorated item is applied to the mould, there is a layer of transparent hardenable liquid material between the preformed decorated item and the mould; and

   the backing sheet is removed from the preformed decorated item prior to the moulding of the article.

2. A method according to claim 1, wherein the transparent hardenable liquid material is formed the preformed decorated item prior to the location of the preformed decorated item in the mould.

3. A method according to claim 1, wherein the transparent hardenable liquid material is applied to a surface of the mould prior to the locating of the preformed decorated item in the mould at a location in the mould corresponding to the transparent hardenable liquid material.

4. A method according to any one of claims 1 to 3, wherein the preformed decorated item includes a further layer of transparent hardenable liquid material covering at least the decoration.

5. A method of decorating a moulded article comprising:

   forming a decoration of pigmented hardenable liquid material on a backaging sheet, thereby to form a preformed decorated item;

   locating the preformed decorated item in a mould; and

   moulding the article in the mould, whereby the decoration is bonded to the surface of the moulded article during moulding;

   characterised in that:

   the preformed decorated item includes a layer of transparent hardenable liquid material covering at least the decoration; and

   the backing sheet is removed from the preformed item prior to the moulding of the article.

6. A method according to claim 5, wherein after formation of said layer of transparent hardenable liquid material, said layer of transparent liquid material is covered with a cover sheet.

7. A method according to claim 6 wherein, when said preformed decorated item is located in said mould, said cover sheet is between said layer of transparent hardenable liquid material and said mould.

8. A method according to claim 6 wherein, said cover sheet is removed prior to the location of said preformed decorated item in said mould.

9. A method according to any one of claims 5 to 8, wherein said backing sheet is removed from said preformed decorated item prior to the location of that said preformed decoration item in said mould.

10. A method according to any one of claims 1 to 8, wherein, after the preformed decorated item is located in the mould, but before removal of the backing sheet, pressure is applied to the backing sheet to expel air from between the backing sheet and the mould, thereby to form a close, uninterrupted bond between the layer of transparent hardenable liquid material and the decoration.

11. A method according to any one of the preceding claims, wherein the layer of transparent hardenable liquid material is allowed at least partially to cure after the applying of the preformed article to the mould, and before the removal of the backing sheet.

12. A method of decorating a moulded article comprising the steps of:
    forming a decoration of pigmented hardenable liquid material on a backing sheet;
    forming a first layer of hardenable material over said backing sheet, at least covering said decoration;
    first locating a first cover sheet over said first layer of hardenable liquid material;
    removing said backing sheet;
    forming a second layer of hardenable liquid material on said first layer of hardenable liquid material, thereby to form a preformed decorated item;
    locating said preformed decorated item in a mould; and
    moulding said article in said mould, thereby to bond said preformed decorated item to said article.

13. A method according to claim 12, wherein said second layer of hardenable liquid material is covered with a second cover sheet.

14. A method according to claim 13, wherein both said first and second cover sheets are removed from the preformed decorated item prior to the moulding of said article.

15. A method according to claim 13, wherein one of said first and second cover sheets are removed from said preformed decorated item and the other of said first and second cover sheets is located adjacent said mould when said preformed decorated item is located in said mould.

16. A method according to any one of claims 12 to 15, wherein said first cover sheet is removed from said preformed decorated item prior to the moulding of the article.

17. A method according to any one of claims 12 to 16, wherein said first cover sheet is located adjacent said mould when said preformed decorated item is located in said mould.

18. A method according to any one of claims 12 to 17, wherein said first layer of hardenable liquid material is transparent and said second layer of hardenable material is pigmented.

19. A method according to any one of claims 12 to 17, wherein said first layer of hardenable liquid material is pigmented and said second layer of hardenable liquid material is transparent.

20. A method according to any one of claims 12 to 17, wherein said first and second layers of hardenable material are transparent.

21. A method according to any one of the preceding claims, wherein the forming of the decoration on the backing sheet comprises forming a support layer of a hardenable liquid material on the backing sheet and applying the decoration to that support layer.

22. A method of decorating a moulded article, comprising the steps of:
    forming a layer of a transparent hardenable liquid material on at least a part of a backing sheet;
    applying a decoration of pigmented hardenable liquid material to the hardenable liquid material, thereby to form a preformed decorated item;
    adhesively bonding said backing sheet of said preformed decoration item to a surface of a mould;
    moulding said article in said mould, whereby said decoration is bonded to a surface of the moulded article during moulding;
    removing said article from said mould; and

removing said backing sheet from said article.

23. A method according to claim 22, wherein a layer of adhesive is applied to said preformed decorated item prior to said adhesive bonding of said backing sheet to said mould.

24. A method according to claim 22, wherein a layer of adhesive is applied to said surface of said mould prior to said adhesive bonding of said backing sheet to said mould.

25. A method according to any one of the preceding claims, wherein the layer of transparent hardenable liquid material comprises an unsaturated polyester resin, a catalyst/ activator system and at least one wax additive.

26. A method according to any one of the preceding claims, wherein the pigmented hardenable liquid material is a pigmented resin composition capable of undergoing cross-linking with the transparent hardenable liquid material and/or the further transparent hardenable liquid material.

27. A method according to claim 26, wherein the pigmented resin composition is a pigmented unsaturated polyester resin composition and the transparent hardenable liquid material and/or the further transparent hardenable liquid material is an unsaturated polyester resin composition containing a catalyst/activator system for the reason and at least one wax additive.

28. A method of decorating a moulded article, comprising the steps of:
    moulding said article;
    forming a decoration of pigmented hardenable liquid material on a backing sheet;
    forming a layer of hardenable liquid material on a surface of said article;
    locating said backing sheet over said layer of hardenable liquid material;
    causing said pigmented hardenable liquid material to bond to said layer of hardenable liquid material; and
    removing said backing sheet.

29. A method according to claim 28, further including forming a further layer of transparent hardenable liquid material over said pigmented liquid material after the removal of said backing sheet.

30. A method according to claim 28 or claim 29, wherein said layer of hardenable liquid material is pigmented.

31. A method of decorating a moulded article comprising;
    moulding said article;
    forming a decoration of pigmented hardenable liquid material to a backing sheet;
    forming a first layer of hardenable material over said backing sheet, at least covering said decoration;
    first locating a first cover sheet over said first layer of hardenable liquid material;
    removing said backing sheet;
    forming a second layer of hardenable liquid material on said first layer of hardenable liquid material thereby to form a preformed decorated item;
    forming further a layer of hardenable liquid material on a surface of said article;
    locating said preformed decorated item over said further layer of hardenable liquid material; and
    causing said preformed decoration item to bond to said further layer of hardenable liquid material.

32. A method according to claim 31, wherein a layer of transparent hardenable liquid material is formed on said backing sheet prior to the forming of said decoration, and said decoration is formed on said layer of transparent hardenable liquid material.

33. A method according to any one of claims 28 to 32 wherein the forming of the decoration on the backing sheet comprises forming a support layer of a hardenable liquid material on the backing sheet and applying the decoration to that support layer.

Fig.1.

EP 0 510 266 A1

Fig. 2.

Fig.5a.

Fig.5b.

Fig.6a.

Fig.6b.

Fig.6c

Fig.6d

Fig.7a.

Fig.7b.

Fig.8a.

Fig.8b.

Fig.8c.

Fig.9a.    Fig.9b.    Fig.9c.

Fig.10a    Fig.10b.

17

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | CH-A-475 621 (VAN AERDE ET AL.)<br><br>* the whole document *<br>--- | 1,3,10,<br>11,25 | B29C37/00<br>B29C67/14 |
| A | BE-A-547 974 (FOOD MACHINERY AND CHEMICAL CORPORATION)<br>* page 6, paragraph 3 *<br>--- | 2,4,5,<br>28-33 | |
| A | EP-A-0 148 611 (TORAY SILICONE COMPANY)<br>* claim 1 *<br>--- | 22-24 | |
| A | US-A-3 379 592 (OSTROWICZ)<br>* column 5, line 13 - line 31 *<br><br>----- | 28-30 | |
|  |  |  | TECHNICAL FIELDS SEARCHED (Int. Cl.5 )<br><br>B29C<br>B41M |

The present search report has been drawn up for all claims

| Place of search | Date of completion of the search | Examiner |
|---|---|---|
| THE HAGUE | 31 JULY 1992 | VAN WALLENE A.M. |